# EUROPEAN PATENT APPLICATION

(11) **EP 4 427 839 A1**
(43) Date of publication of application: **11.09.2024**
(21) Application number: 22907487.7
(22) Date of filing: 14.12.2022
(51) Int. Cl.: B01J 35/04, B01D 53/94, B01J 32/00, F01N 3/28

(54) **CATALYST-CARRYING SUBSTRATE USED IN PURIFICATION OF EXHAUST GAS**

(30) Priority: 16.12.2021 JP 2021204448
(71) Applicant: NIPPON STEEL CHEMICAL & MATERIAL CO., LTD., Tokyo 103-0027 (JP)
(72) Inventor: MURAMATSU, Kei, Tokyo 103-0027 (JP); KONYA, Shogo, Tokyo 103-0027 (JP); INAGUMA, Toru, Tokyo 103-0027 (JP); OMIZU, Masafumi, Tokyo 103-0027 (JP); GOTO, Yasuhide, Tokyo 103-0027 (JP)
(74) Representative: J A Kemp LLP
(86) International application number: PCT/JP2022/046052
(87) International publication number: WO 2023/112964

(57) **Abstract**

[Problem]

The purpose of the present invention is to provide a substrate for carrying catalyst with which it is possible to (1) enhance purification performance, (2) suppress any increase in pressure loss, and (3) suppress any breakage at a boundary between an opening region and a non-opening region.

[Solution]

A substrate for carrying catalyst comprising a plurality of honeycomb bodies, the substrate for carrying catalyst being used for purifying exhaust gas of a vehicle, wherein the plurality of honeycomb bodies are arranged side by side such that central axes of each of the honeycomb bodies substantially coincide, of the plurality of honeycomb bodies, many through holes are formed in one or more metal foils of a first honeycomb body positioned closest to the exhaust gas inlet side, and no through hole is formed in metal foils of other remaining one or more honeycomb bodies, when the first honeycomb body is divided in the axial direction into the following regions: an opening region in which the through holes are formed; a first non-opening region from the exhaust gas inlet-side end of the opening region to the exhaust gas inlet-side edge of the first honeycomb body; and a second non-opening region from the exhaust gas outlet-side end of the opening region to the exhaust gas outlet-side edge of the first honeycomb body, a length of the first non-opening region in the axial direction is 2 mm or more and 10 mm or less, and a length of the second non-opening region in the axial direction is 10 mm or less, when a honeycomb body adjacent to the first honeycomb body in the axial direction is defined as a second honeycomb body, the first honeycomb body and the second honeycomb body are separated in the axial direction, and a separation distance between the first honeycomb body and the second honeycomb body in the axial direction is 2 mm or more and 20 mm or less, and a ratio of a length of the opening region in the axial direction to a sum of lengths of the plurality of honeycomb bodies in the axial direction is 20% or more and 80% or less.

## Description

### Technical Field

The present invention relates to a catalyst-carrying substrate used for purifying air pollutants contained in exhaust gas.

### Background Art

A catalytic converter, constructed by fitting a metallic honeycomb body (substrate for carrying catalyst) into an outer mantle made of a heat-resistant alloy, is known as a purification device for purifying exhaust gas discharged from an internal combustion engine. By placing the catalytic converter in the exhaust gas path, the exhaust gas passing through the catalytic converter comes into contact with the catalyst over a wide area, enabling efficient purification of the exhaust gas. As the honeycomb body, the following is used: a honeycomb body constructed by alternately laminating a metallic flat foil and a corrugated foil formed by corrugating the flat foil, a honeycomb body formed by winding a metallic flat foil and a corrugated foil, or other types of honeycomb bodies.

To improve the purification performance of exhaust gas in a catalytic converter, a honeycomb body provided with holes across the entire foil has been proposed (cf. Patent Literatures 1 and 2). By forming holes in the foil, (A) the heat capacity of the honeycomb body is reduced, so that the heat of the exhaust gas can be used for early activation of the catalyst carried on the honeycomb body, and (B) the exhaust gas passing through the honeycomb body is likely to be turbulent, enabling more efficient purification of the exhaust gas. Therefore, the purification performance of the honeycomb body can be improved.

However, in the honeycomb body disclosed in each of Patent Literatures 1 and 2, the holes are provided in the entire foil, causing an increase in pressure loss.

In view of this point, Patent Literature 3 proposes a metal carrier (honeycomb body) provided with an opening only upstream of an exhaust gas path in a flat foil and/or a corrugated foil provided in the honeycomb body. In the metal carrier, a portion on the exhaust gas inlet-side where the heated exhaust gas comes into contact with the catalyst at an early stage contributes greatly to the early activation of the catalyst. Therefore, by providing an opening upstream of the exhaust gas path, the effect of early activation of the catalyst described in (A) above can be fully enjoyed. Further, as described in (B) above, by forming an opening in the foil, turbulence can be likely to be generated in the exhaust gas. Therefore, according to the structure disclosed in Patent Literature 3, purification performance can be improved. Moreover, by not providing an opening downstream of the exhaust gas path, an increase in pressure loss, an issue in Patent Literatures 1 and 2, can be suppressed.

### Citation List

### Patent Literature

Patent Literature 1: Japanese Patent Laid-Open No. 55-132640
Patent Literature 2: Japanese Patent Laid-Open No. 62-53744
Patent Literature 3: Japanese Patent Laid-Open No. 6-320014
Patent Literature 4: International Publication No. WO 90/03842 A1
Patent Literature 5: Japanese Patent Laid-Open No. 2011-156505
Patent Literature 6: Japanese Utility Model Laid-Open No. 2-83320
Patent Literature 7: Japanese Patent Laid-Open No. 5-195763

### Summary of Invention

### Technical Problem

However, as a result of durability tests of the metal carrier proposed in Patent Literature 3 through exhaust gas conduction, a phenomenon was confirmed where cracks occur at a boundary between a region provided with the opening (hereinafter referred to as an opening region) and a region without the opening (hereinafter referred to as a non-opening region), leading to the breakage of the metal carrier.

Therefore, it is an object of the present invention to provide a substrate for carrying catalyst that: (1) enhances purification performance; (2) suppresses an increase in pressure loss; and (3) suppresses breakage at a boundary between an opening region and a non-opening region.

### Solution to Problem

To solve the above problem, the present invention is as follows.
(1) A substrate for carrying catalyst including a plurality of honeycomb bodies, the substrate for carrying catalyst being used for purifying exhaust gas of a vehicle. The plurality of honeycomb bodies are arranged side by side such that central axes of each of the honeycomb bodies substantially coincide. Of the plurality of honeycomb bodies, many through holes are formed in one or more metal foils of a first honeycomb body positioned closest to an exhaust gas inlet side, and no through hole is formed in metal foils of other remaining honeycomb bodies. When the first honeycomb body is divided in the axial direction into the following regions: an opening region in which the through holes are formed; a first non-opening region from the exhaust gas inlet-side end of the opening region to the exhaust gas inlet-side edge of the first honeycomb body; and a second non-opening region from the exhaust gas outlet-side end of the opening region to the exhaust gas outlet-side edge of the first honeycomb body, a length of the first non-opening region in the axial direction is 2 mm or more and 10 mm or less, and a length of the second non-opening region in the axial direction is 10 mm or less. When a honeycomb body adjacent to the first honeycomb body in the axial direction is defined as a second honeycomb body, the first honeycomb body and the second honeycomb body are separated in the axial direction, and a separation distance between the first honeycomb body and the second honeycomb body in the axial direction is 2 mm or more and 20 mm or less. A ratio of a length of the opening region in the axial direction to a sum of lengths of the plurality of honeycomb bodies in the axial direction is 20% or more and 80% or less.
(2) The substrate for carrying catalyst according to (1), in which the separation distance between the first honeycomb body and the second honeycomb body in the axial direction is 2 mm or more and less than 10 mm.
(3) The substrate for carrying catalyst according to (1) or (2), in which the length of the second non-opening region in the axial direction is longer than the length of the first non-opening region in the axial direction.
(4) A honeycomb unit including: the substrate for carrying catalyst according to any one of (1) to (3); and an outer mantle that houses the substrate for carrying catalyst.
(5) A catalytic converter including: the honeycomb unit according to (4); and a catalyst carried on each of the plurality of honeycomb bodies.

### Advantageous Effects of Invention

The substrate for carrying catalyst according to the present invention can: (1) enhance purification performance; (2) suppress an increase in pressure loss; and (3) suppress breakage at a boundary between an opening region and a non-opening region.

### Brief Description of Drawings

[Figure 1] Figure 1 is a perspective view of a honeycomb unit in the present embodiment.
[Figure 2] Figure 2 is a longitudinal cross-sectional view of the honeycomb unit illustrated in Figure 1.
[Figure 3] Figure 3 is an enlarged longitudinal cross-sectional view of a first honeycomb body 4A illustrated in Figure 1.
[Figure 4] Figure 4 is an expanded view of a flat foil 2 in the first honeycomb body 4A illustrated in Figure 1.
[Figure 5] Figure 5 is an enlarged view of a region S surrounded by a dashed line in Figure 4.

### Descriptions of Embodiment

### (Basic configuration of honeycomb unit)

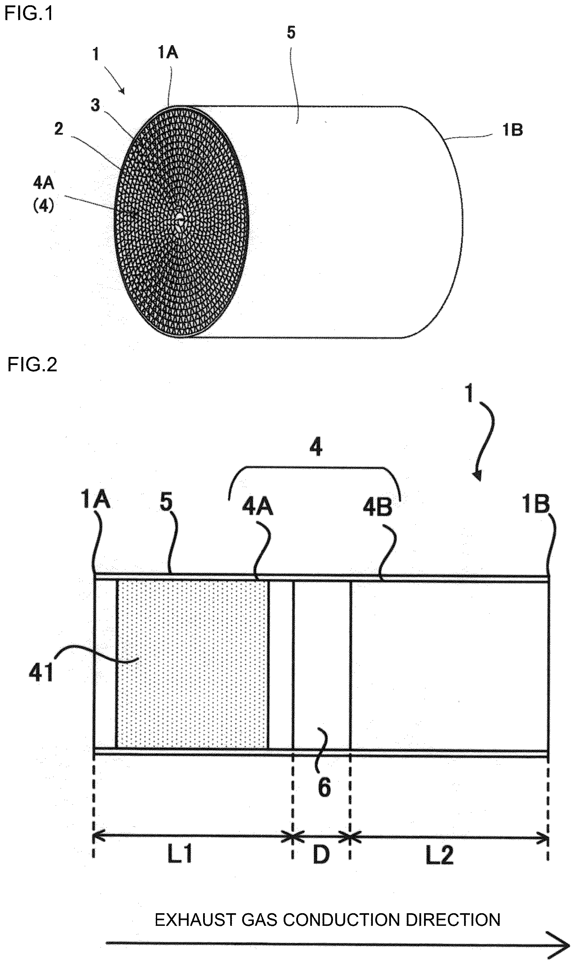

An embodiment according to the present invention will be described below with reference to the drawings. Figure 1 is a perspective view of a honeycomb unit in the present embodiment. Figure 2 is a longitudinal cross-sectional view of the honeycomb unit illustrated in Figure 1. The arrow illustrated in Figure 2 indicates the direction of exhaust gas conduction, and this direction coincides with the axial direction of a substrate for carrying catalyst. Referring to Figures 1 and 2, a honeycomb unit 1 includes a substrate for carrying catalyst 4 and an outer mantle 5 made of heat-resistant metal for housing the substrate for carrying catalyst 4. In the present embodiment, the substrate for carrying catalyst 4 has a configuration with serial arrangement of a first honeycomb body 4A disposed upstream of the exhaust gas path and a second honeycomb body 4B that is disposed downstream of the exhaust gas path, with its central axis substantially coincident with that of the first honeycomb body 4A, and is adjacent to the first honeycomb body 4A in the axial direction. However, one or more honeycomb bodies having the same configuration as the second honeycomb body 4B may be further arranged in series downstream of the second honeycomb body 4B. The phrase "its central axis substantially coincident" does not only mean the complete overlap of the center axes but also means allowing slight deviations therebetween due to manufacturing errors or the like in the honeycomb bodies. The cell density of each of the first honeycomb body 4A and the second honeycomb body 4B is preferably set to 100 cells to 600 cells per square inch. By increasing the cell density, purification performance is improved, but the pressure loss also increases accordingly. Therefore, the value of the cell density to be set may be appropriately selected according to the required output performance and exhaust gas level.

The first honeycomb body 4A and the second honeycomb body 4B are each constructed by winding a flat foil 2 and a corrugated foil 3, which are made of a heat-resistant alloy, around the axis in an overlapped state, and joining the flat foil 2 and the corrugated foil 3 to each other using a brazing material. Thus, the flat foil 2 and the corrugated foil 3 are alternately laminated in the radial direction. According to the configuration described above, many gas flow paths extending in the axial direction can be formed inside the first honeycomb body 4A and the second honeycomb body 4B. Note that the corrugated foil 3 is formed by corrugating the flat foil 2. The honeycomb unit 1 is constructed by inserting the first honeycomb body 4A and the second honeycomb body 4B into the outer mantle 5 and joining the outermost peripheral surfaces of the first honeycomb body 4A and the second honeycomb body 4B and the inner peripheral surface of the outer mantle 5 with the brazing material. The joint positions of the flat foil 2 and the corrugated foil 3 and the joint positions of the first and second honeycomb bodies 4A and 4B and the outer mantle 5 are not particularly limited, but the joining can be performed at known joint positions such as those shown in Patent Literatures 4 and 5. As the brazing material used for joining the flat foil 2 and the corrugated foil 3 and for joining the first and second honeycomb bodies 4A and 4B and the outer mantle 5, brazing foil can be used, for example, a nickel-based brazing material such as BNi-2 and BNi-5 can be used. However, a powdery or granular brazing material different from the brazing foil can also be used.

As the heat-resistant alloy used for the flat foil 2 and the corrugated foil 3, Fe-20Cr-5Al stainless steel can be suitably employed, but the present invention is not limited thereto, and various heat-resistant stainless steels containing Al in the alloy composition can be employed. Generally, an alloy containing 15 to 25 mass% Cr and 2 to 8 mass% Al can be used as the heat-resistant alloy. For example, an Fe-20Cr-5Al alloy, an Fe-18Cr-3Al alloy, an Fe-20Cr-8Al alloy, and the like can be used. By reducing the foil thickness of the flat foil 2 and the corrugated foil 3, the heat capacity of the honeycomb body is reduced, enabling early activation of the catalyst and a further improvement in initial purification performance. On the other hand, when the foil thicknesses of the flat foil 2 and the corrugated foil 3 are reduced, the strength of the foil is reduced, thus leading to a decrease in the durability of the honeycomb body. Therefore, the foil thicknesses of the flat foil 2 and the corrugated foil 3 can be set appropriately based on the required durability and purification performance. Preferably, the foil thicknesses of the flat foil 2 and the corrugated foil 3 are set to 20 µm to 100 µm. For example, stainless steel such as SUS436L can be employed as the heat-resistant alloy used for the outer mantle 5, but the present invention is not limited thereto, and various heat-resistant alloys can be used. Note that the thickness of the outer mantle 5 is preferably set to 1 mm to 2 mm.

A catalyst (not illustrated) is carried on the flat foil 2 and the corrugated foil 3. The catalyst can be carried on the flat foil 2 and the corrugated foil 3 by applying a predetermined wash coat slurry to the foil surfaces of the first honeycomb body 4A and the second honeycomb body 4B, followed by drying and baking. As the wash coat slurry, it is possible to use, for example, a slurry formed by stirring γ-alumina powder, lanthanum oxide, zirconium oxide, and cerium oxide in an aqueous solution of palladium nitrate.

The honeycomb unit carrying a catalyst (i.e., a catalytic converter) can be placed in the exhaust gas path of a vehicle so that exhaust gas flowing in from the inlet-side end 1A is discharged to the outlet-side end 1B. The vehicle includes two-wheelers, four-wheelers, off-road vehicles, and the like. When the exhaust gas flowing into the gas flow path of the honeycomb body comes into contact with the catalyst, carbon monoxide (CO), hydrocarbons, and nitrogen oxides (NOx) contained in the exhaust gas are rendered harmless, enabling clean gas to be discharged outside the vehicle.

### (Configurations of first honeycomb body and second honeycomb body)

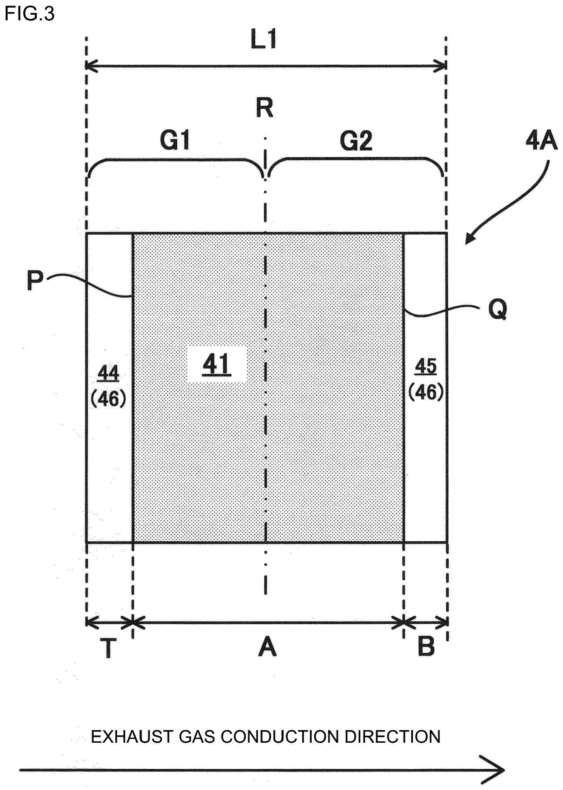

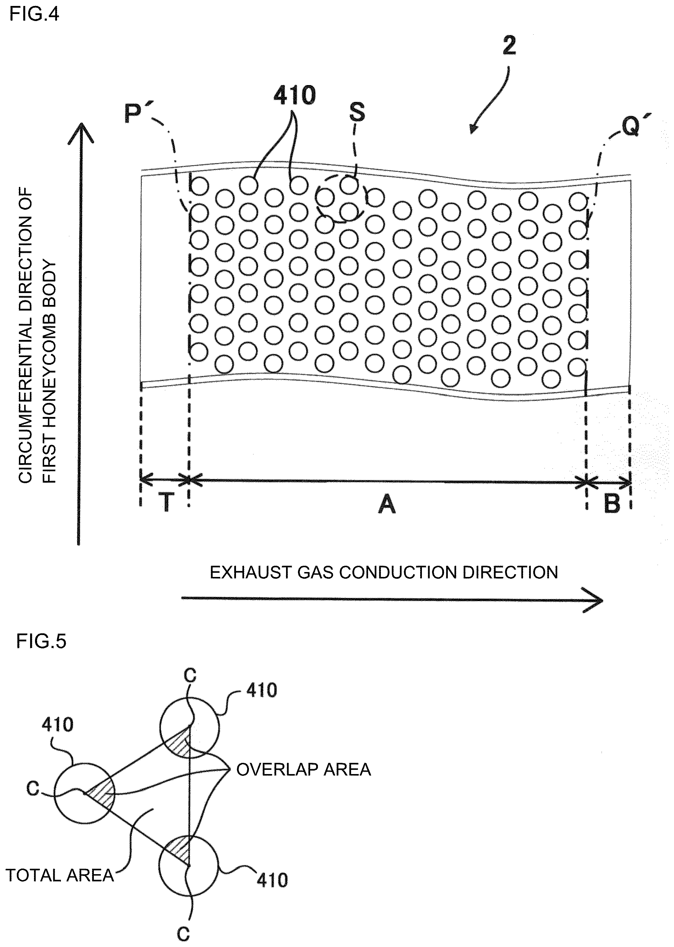

Figure 3 is an enlarged longitudinal cross-sectional view of the first honeycomb body 4A illustrated in Figure 1. Figure 4 is an expanded view of the flat foil 2 in the first honeycomb body 4A illustrated in Figure 1. The direction of exhaust gas conduction illustrated in Figure 4 corresponds to the short-side direction of the flat foil 2, and the circumferential direction of the first honeycomb body illustrated in Figure 4 corresponds to the longitudinal direction of the flat foil 2. Referring to Figure 4, the flat foil 2 and the corrugated foil 3 of the first honeycomb body 4A are previously provided with a plurality of through holes 410 penetrating the foil in the thickness direction at corresponding positions in the direction of exhaust gas conduction (the short-side direction of the flat foil 2 and the corrugated foil 3). By winding the flat foil 2 and the corrugated foil 3 around the axis in the overlapped state, a region (opening region 41) in which the through holes 410 are provided in the axial direction is formed in the first honeycomb body 4A (cf. Figures 2 and 3). Here, in the present embodiment, the through holes 410 are provided at positions separated from both edges of the flat foil 2 and the corrugated foil 3 in the short-side direction (cf. Figure 4). That is, in the first honeycomb body 4A, a non-opening region 46 without the through holes 410 is formed both in front of and behind the opening region 41 in the axial direction, and the non-opening region 46 includes a first non-opening region 44 extending from the inlet-side end of the opening region 41 to the inlet-side edge of the first honeycomb body 4A, and a second non-opening region 45 extending from the outlet-side end of the opening region 41 to the outlet-side edge of the first honeycomb body 4A. In the present embodiment, "the inlet-side end of the opening region 41" refers to a boundary plane P orthogonal to the axial direction of the first honeycomb body 4A through the outer edge of the through holes 410 formed at the position closest to the inlet-side edge of the first honeycomb body 4A, and "the outlet-side end of the opening region 41" refers to a boundary plane Q orthogonal to the axial direction of the first honeycomb body 4A through the outer edge of the through holes 410 formed at the position closest to the outlet-side edge of the first honeycomb body 4A. That is, the region of the first honeycomb body 4A sandwiched between the boundary planes P and Q is the opening region 41, the region of the first honeycomb body 4A closer to the inlet-side edge than the boundary plane P is the first non-opening region 44, and the region of the first honeycomb body 4A closer to the outlet-side edge than the boundary plane Q is the second non-opening region 45. The boundary planes P and Q of the first honeycomb body 4A in Figure 3 correspond to P' and Q', respectively, which are indicated by dash-dot lines in Figure 4. By providing the first non-opening region 44 at the inlet-side edge of the first honeycomb body 4A, it is possible to further suppress the damage of the foil of the first honeycomb body 4A due to exhaust gas pulsation.

Referring to Figure 4, in the present embodiment, the through holes 410 are arranged in a zigzag pattern along the axial direction. Here, the "zigzag pattern" means that the arrangement relationship in which the next row of through holes is disposed on a virtual line extending in the axial direction through the intermediate position of the circumferentially adjacent through holes is continuous in the axial direction. However, the arrangement of the through holes 410 is not limited to the zigzag arrangement along the axial direction, and may be, for example, a matrix arrangement in which the through holes are arranged linearly along the axial direction and the circumferential direction of the first honeycomb body. Further, the through holes 410 may be provided only on either the flat foil 2 or the corrugated foil 3. Moreover, the position where the through holes 410 are provided in the flat foil 2 and the position where the through holes 410 are provided in the corrugated foil 3 may differ in the direction of exhaust gas conduction.

The diameter (i.e., opening area) of the through hole 410, the shape of the through hole 410, and the like may be appropriately set according to the width, length, and the like of each of the flat foil 2 and the corrugated foil 3. The diameter of the through hole 410 is preferably set to 0.2 mm or more and 8 mm or less. By setting the diameter of the through hole 410 to 0.2 mm or more, the possibility of the through holes 410 being blocked by the catalyst can be reduced, and thus turbulence can be generated more easily in the exhaust gas, enabling more efficient purification of exhaust gas. By setting the diameter of the through hole 410 to 8 mm or less, the through holes 410 becomes moderately small, and thus turbulence can be generated more easily in the exhaust gas, enabling more efficient purification of exhaust gas. Since the through holes 410 has a circular shape, a suitable opening area of each through hole 410 is 0.031 mm² or more and 50.3 mm² or less. As long as the opening area of each through hole 410 is 0.031 mm² or more and 50.3 mm² or less, the same effect can be obtained even if the shape of the through hole 410 is not circular (e.g., ellipses).

### (History of present invention)

First, the present inventors have carefully examined the mechanism by which cracks occur at the boundary between the opening region and the non-opening region in the metal carrier of Patent Literature 3. As a result, it was considered that the substantial difference in heat capacity and thermal conductivity between the opening region and the non-opening region leads to an increase in axial temperature gradient near the boundary between the opening region and the non-opening region, causing stress concentration and fracture. As a result of careful examination based on the above mechanism, the present inventors came up with a configuration divided into: a honeycomb body in the front part with the opening region; and a honeycomb body in the rear part without the opening region. According to this configuration, it is possible to enjoy the same effects of "improvement in purification performance" and "suppression of an increase in pressure loss" as those of the metal carrier disclosed in Patent Literature 3, and to reduce the axial temperature gradient near the boundary between the opening region and the non-opening region, thereby suppressing the occurrence of cracks at the boundary.

Here, even if the substrate for carrying catalyst 4 is formed solely of the first honeycomb body 4A, the axial temperature gradient near the boundary between the opening region and the non-opening region can be reduced, thereby suppressing the occurrence of cracks. However, with this configuration, the axial length of the substrate for carrying catalyst 4 cannot be sufficiently ensured compared to, for example, the metal carrier described in Patent Literature 3. This makes the absolute amount of the catalyst carried on the substrate for carrying catalyst 4 insufficient, causing a reduction in the steady-state purification performance (purification performance after the initial stage) of the honeycomb unit 1. It is conceivable that the axial length of the substrate for carrying catalyst 4 is sufficiently ensured by excessively increasing the axial length of the first honeycomb body 4A, but with this configuration, as described above, pressure loss increases while purification performance is improved. In contrast, by adopting the configuration of the present invention described above (the configuration including the first honeycomb body 4A in the front part with the opening region and the second honeycomb body 4B in the rear part without the opening region), (1) the axial length of the substrate for carrying catalyst 4 can be sufficiently ensured, thereby improving the steady-state purification performance of the honeycomb unit 1, and (2) the axial length of the first honeycomb body 4A is not excessively long, so that the increase in the pressure loss can be suppressed. Note that the present inventors have separately found that the presence or absence of through holes in the second honeycomb body 4B has little effect on the initial purification performance of the honeycomb unit 1.

In view of the above history, when the axial length T of the first non-opening region 44 is excessively long in the first honeycomb body 4A, cracks may occur at the boundary P between the opening region 41 and the first non-opening region 44. When the axial length B of the second non-opening region 45 is excessively long in the first honeycomb body 4A, cracks may occur at the boundary Q between the opening region 41 and the second non-opening region 45. Therefore, in the first honeycomb body 4A, it is necessary to set the axial length T of the first non-opening region 44 to 2 mm or more and 10 mm or less, and to set the axial length B of the second non-opening region 45 to 10 mm or less. Note that setting the length of T to 2 mm or more makes it possible to suppress the damage of the foil of the first honeycomb body 4A due to exhaust gas pulsation. The lower limit of the axial length B of the second non-opening region 45 is not particularly limited, but can be, for example, about 1 mm.

When the ratio of the axial length A of the opening region 41 of the first honeycomb body 4A to the sum of the axial lengths of the honeycomb bodies constituting the substrate for carrying catalyst 4 (in the present embodiment, the sum of the axial length L1 of the first honeycomb body 4A and the axial length L2 of the second honeycomb body 4B) is X, X is set to 20% or more and 80% or less. When X is set to less than 20%, the axial length of the opening region 41 becomes excessively short, so that the initial purification performance of the honeycomb unit 1 cannot be sufficiently enhanced. On the other hand, when X is increased, the axial length of the opening region 41 increases, thereby improving the purification performance, but the pressure loss also increases accordingly. When X is set to more than 80%, the axial length of the opening region 41 increases excessively, so that the pressure loss becomes excessive and the purification performance hardly improves. As described above, since there is a trade-off between the pressure loss and the purification performance, the value of X can be set appropriately in the range of 20% or more and 80% or less based on the required output performance and exhaust gas level. Note that it is more preferable to set X to 25% or more and 55% or less.

Referring to Figure 3, the axial length B of the second non-opening region 45 is preferably longer than the axial length T of the first non-opening region 44. According to this configuration, when the first honeycomb body 4A is divided in the axial center into the following regions: the exhaust gas inlet-side region G1 located on the exhaust gas inlet-side; and the exhaust gas outlet-side region G2 located on the exhaust gas outlet-side, the heat capacity of the exhaust gas inlet-side region G1 can be reduced compared to that of the exhaust gas outlet-side region G2 because the opening region 41 is unevenly distributed in the exhaust gas inlet-side region G1 of the first honeycomb body 4A. This enables early activation of the catalyst and a further improvement in purification performance. Note that the "axial center" corresponds to the boundary plane R passing through the center in the axial direction of the first honeycomb body 4A and orthogonal to the axial direction of the first honeycomb body 4A.

Referring to Figure 2, the first honeycomb body 4A and the second honeycomb body 4B are spaced apart from each other by a separation distance D (mm) in the axial direction of the substrate for carrying catalyst 4. The separation distance D (mm) can be set appropriately.

However, the separation distance D (mm) is set to 2 ≤ D ≤ 20. The reason for this will be explained below.

When the exhaust gas passes through the substrate for carrying catalyst 4, the flat foil 2 and the corrugated foil 3 may extend due to the heat of the exhaust gas. In this case, if the first honeycomb body 4A and the second honeycomb body 4B are excessively close to each other, there is a risk that the first honeycomb body 4A and the second honeycomb body 4B may come into contact with each other and break. Thus, 2 mm or more is ensured for the separation distance D (mm).

On the other hand, when the exhaust gas discharged from the first honeycomb body 4A flows into the second honeycomb body 4B, the heat of the exhaust gas is dissipated to the outside of the honeycomb unit 1 via the outer mantle 5 at the separation section 6 between the first honeycomb body 4A and the second honeycomb body 4B. Therefore, the temperature of the exhaust gas when flowing into the second honeycomb body 4B decreases from the temperature of the exhaust gas when discharged from the first honeycomb body 4A. Since the second honeycomb body 4B is disposed downstream of the first honeycomb body 4A, its contribution to the steady-state purification performance is large. However, when the temperature of the exhaust gas flowing into the second honeycomb body 4B decreases, the activation of the catalyst carried on the second honeycomb body 4B is delayed, thereby inhibiting an improvement in steady-state purification performance. By setting the axial length of the separation section 6, that is, the separation distance D (mm), to 20 mm or less, heat dissipation to the outside in the separation section 6 can be reduced, so that a decrease in the temperature of the exhaust gas flowing into the second honeycomb body 4B can be suppressed. This enables efficient activation of the catalyst carried on the second honeycomb body 4B and an improvement in purification performance.

The separation distance D (mm) is preferably set to 2 ≤ D < 10. By setting the separation distance D (mm) to less than 10 mm, the heat dissipation to the outside in the separation section 6 can be further reduced, so that a decrease in the temperature of the exhaust gas flowing into the second honeycomb body 4B can be further suppressed. This enables more efficient activation of the catalyst carried on the second honeycomb body 4B and a further improvement in purification performance.

Conventionally, as a substrate for carrying catalyst having a configuration in which two honeycomb bodies are arranged in series, as disclosed in Patent Literatures 6 and 7, a substrate for carrying catalyst in which no through hole is formed in the foil of any of the honeycomb bodies is used. With this conventional configuration, exhaust gas flowing into the upstream honeycomb body flows inside the honeycomb body in a laminar (rather than turbulent) flow, making it difficult to improve purification performance. To obtain sufficient purification performance with this configuration, it is necessary to increase the separation distance between the honeycomb bodies. According to this configuration, since turbulence is generated in the exhaust gas during its flow through the separation section between the upstream honeycomb body and the downstream honeycomb body, purification performance can be improved in the downstream honeycomb body. However, as described above, if the separation distance between the honeycomb bodies is too wide, the heat of the exhaust gas is dissipated excessively via the outer mantle 5 in the separation section, and the temperature of the exhaust gas flowing into the second honeycomb body 4B decreases excessively. In view of these trade-offs, it is generally considered necessary to set the separation distance between the honeycomb bodies to 10 mm or more and 30 mm or less (e.g., see Patent Literature 7).

On the other hand, as described above, the separation distance D (mm) between the first honeycomb body 4A and the second honeycomb body 4B in the present invention can be set to less than 10 mm. This is because the first honeycomb body 4A in the present invention is provided with the opening region 41 (a plurality of through holes 410), so that turbulence can be generated in the exhaust gas in the first honeycomb body 4A, and sufficient purification performance can be obtained even if the separation distance between the first honeycomb body 4A and the second honeycomb body 4B is reduced. Therefore, a new effect is that the substrate for carrying catalyst can be made smaller than the conventional substrate for carrying catalyst in which two honeycomb bodies without through holes formed in the foil are arranged in series.

The opening ratio of the through holes in the opening region 41 can be appropriately set according to the application of the substrate for carrying catalyst 4 or the like. The definition of the opening ratio will now be described with reference to Figure 5. Figure 5 is an enlarged view of the region S surrounded by the dashed line in Figure 4. Referring to Figure 5, a triangle is drawn with the centers of gravity of three through holes 410 (in the present embodiment, centers C of the through holes 410) adjacent to each other as the vertex. The area of the triangle is defined as a total area, and the area of portions where the triangle overlaps the through holes is defined as an overlap area. At this time, the opening ratio is calculated as "the ratio of the overlap area to the total area." Even if the through hole has a shape other than circular, the opening ratio can be similarly defined using the center of gravity of the through hole. Even if the through holes are not arranged in a zigzag pattern along the axial direction illustrated in Figure 4 (e.g., the matrix arrangement described above), the opening ratio can be calculated in accordance with the above definition.

Preferably, the opening ratio is set to 20% or more and 60% or less. When the opening ratio is set to 20% or more, the heat capacity of the first honeycomb body 4A can be reduced to a reasonable level, thus improving the initial purification performance more sufficiently. When the opening ratio is set to 60% or less, the durability of the first honeycomb body 4A can be further improved because the foil in the opening region 41 can be retained more sufficiently.

### Examples

Next, the present invention will be specifically described with reference to examples. In the examples described below, names and reference numerals correspond to the names and reference numerals in the embodiment described above.

In the present examples, structural durability, purification performance, and pressure loss were evaluated for catalytic converters with catalyst carried on the substrates for carrying catalyst 4 based on the present invention. Tables 1 to 4 show parameter conditions for each of the examples and comparative examples.

**[Table 1]**

| | Honeycomb body diameter | First honeycomb body length L1 | First non-opening region length T | Opening region length A | Second non-opening region length B | Second honeycomb body length L2 | Separation distance D |
|---|---|---|---|---|---|---|---|
| Example 1 | 50mm | 60mm | 8mm | 44.0mm | 8.0mm | 60mm | 20mm |
| Example 2 | 50mm | 60mm | 6mm | 44.0mm | 10.0mm | 60mm | 20mm |
| Example 3 | 50mm | 60mm | 2mm | 51.9mm | 6.1mm | 60mm | 20mm |
| Example 4 | 50mm | 60mm | 10mm | 44.0mm | 6.0mm | 60mm | 20mm |
| Comparative Example 1 | 50mm | 120mm | 6mm | 44.0mm | 70.0mm | - | - |
| Comparative Example 2 | 50mm | 60mm | 2mm | 44.0mm | 14.0mm | 60mm | 20mm |
| Comparative Example 3 | 50mm | 60mm | 1mm | 51.9mm | 7.1mm | 60mm | 20mm |
| Comparative Example 4 | 50mm | 60mm | 15mm | 44.0mm | 1.0mm | 60mm | 20mm |
| Comparative Example 5 | 50mm | 15mm | 2.5mm | 10.1mm | 2.4mm | 85mm | 20mm |
| Example 5 | 50mm | 25mm | 2.5mm | 20.6mm | 1.9mm | 75mm | 20mm |
| Example 6 | 50mm | 35mm | 2.5mm | 29.7mm | 2.8mm | 65mm | 20mm |
| Example 7 | 50mm | 45mm | 2.5mm | 40.1mm | 2.4mm | 55mm | 20mm |
| Example 8 | 50mm | 55mm | 2.5mm | 50.6mm | 1.9mm | 45mm | 20mm |
| Example 9 | 50mm | 65mm | 2.5mm | 59.7mm | 2.8mm | 35mm | 20mm |
| Example 10 | 50mm | 75mm | 2.5mm | 70.1mm | 2.4mm | 25mm | 20mm |
| Example 11 | 50mm | 85mm | 2.5mm | 79.2mm | 3.3mm | 15mm | 20mm |
| Comparative Example 6 | 50mm | 95mm | 2.5mm | 89.7mm | 2.8mm | 5mm | 20mm |
| Comparative Example 7 | 50mm | 60mm | 5mm | 50.6mm | 4.4mm | 60mm | 1mm |
| Example 12 | 50mm | 60mm | 5mm | 50.6mm | 4.4mm | 60mm | 2mm |
| Example 13 | 50mm | 60mm | 5mm | 50.6mm | 4.4mm | 60mm | 5mm |
| Example 14 | 50mm | 60mm | 5mm | 50.6mm | 4.4mm | 60mm | 10mm |
| Example 15 | 50mm | 60mm | 5mm | 50.6mm | 4.4mm | 60mm | 20mm |
| Comparative Example 8 | 50mm | 60mm | 5mm | 50.6mm | 4.4mm | 60mm | 30mm |
| Comparative Example 9 | 50mm | 60mm | 5mm | 50.6mm | 4.4mm | 60mm | 50mm |
| Example 16 | 50mm | 55mm | 2mm | 44.0mm | 9.0mm | 45mm | 20mm |
| Example 17 | 50mm | 55mm | 10mm | 44.0mm | 1.0mm | 45mm | 20mm |
| Example 18 | 50mm | 60mm | 7mm | 43.7mm | 9.3mm | 60mm | 20mm |
| Example 19 | 50mm | 60mm | 2mm | 51.6mm | 6.4mm | 60mm | 20mm |
| Example 20 | 50mm | 60mm | 10mm | 43.7mm | 6.3mm | 60mm | 20mm |
| Comparative Example 10 | 50mm | 60mm | 2mm | 43.7mm | 14.3mm | 60mm | 20mm |
| Comparative Example 11 | 50mm | 60mm | 1mm | 51.6mm | 7.4mm | 60mm | 20mm |
| Comparative Example 12 | 50mm | 60mm | 15mm | 43.7mm | 1.3mm | 60mm | 20mm |

**[Table 2]**

| | Value of X | Foil thickness | Cell density | Hole diameter | Opening ratio | Outer mantle diameter | Outer mantle length | Outer mantle thickness |
|---|---|---|---|---|---|---|---|---|
| Example 1 | 36.7% | 50µm | 300cpsi | 1mm | 40% | 53mm | 140mm | 1.5mm |
| Example 2 | 36.7% | 50µm | 300cpsi | 1mm | 40% | 53mm | 140mm | 1.5mm |
| Example 3 | 43.2% | 50µm | 300cpsi | 1mm | 40% | 53mm | 140mm | 1.5mm |
| Example 4 | 36.7% | 50µm | 300cpsi | 1mm | 40% | 53mm | 140mm | 1.5mm |
| Comparative Example 1 | 36.7% | 50µm | 300cpsi | 1mm | 40% | 53mm | 120mm | 1.5mm |
| Comparative Example 2 | 36.7% | 50µm | 300cpsi | 1mm | 40% | 53mm | 140mm | 1.5mm |
| Comparative Example 3 | 43.2% | 50µm | 300cpsi | 1mm | 40% | 53mm | 140mm | 1.5mm |
| Comparative Example 4 | 36.7% | 50µm | 300cpsi | 1mm | 40% | 53mm | 140mm | 1.5mm |
| Comparative Example 5 | 10.1% | 50µm | 300cpsi | 1mm | 40% | 53mm | 120mm | 1.5mm |
| Example 5 | 20.6% | 50µm | 300cpsi | 1mm | 40% | 53mm | 120mm | 1.5mm |
| Example 6 | 29.7% | 50µm | 300cpsi | 1mm | 40% | 53mm | 120mm | 1.5mm |
| Example 7 | 40.1% | 50µm | 300cpsi | 1mm | 40% | 53mm | 120mm | 1.5mm |
| Example 8 | 50.6% | 50µm | 300cpsi | 1mm | 40% | 53mm | 120mm | 1.5mm |
| Example 9 | 59.7% | 50µm | 300cpsi | 1mm | 40% | 53mm | 120mm | 1.5mm |
| Example 10 | 70.1% | 50µm | 300cpsi | 1mm | 40% | 53mm | 120mm | 1.5mm |
| Example 11 | 79.2% | 50µm | 300cpsi | 1mm | 40% | 53mm | 120mm | 1.5mm |
| Comparative Example 6 | 89.7% | 50µm | 300cpsi | 1mm | 40% | 53mm | 120mm | 1.5mm |
| Comparative Example 7 | 42.1% | 50µm | 300cpsi | 1mm | 40% | 53mm | 121mm | 1.5mm |
| Example 12 | 42.1% | 50µm | 300cpsi | 1mm | 40% | 53mm | 122mm | 1.5mm |
| Example 13 | 42.1% | 50µm | 300cpsi | 1mm | 40% | 53mm | 125mm | 1.5mm |
| Example 14 | 42.1% | 50µm | 300cpsi | 1mm | 40% | 53mm | 130mm | 1.5mm |
| Example 15 | 42.1% | 50µm | 300cpsi | 1mm | 40% | 53mm | 140mm | 1.5mm |
| Comparative Example 8 | 42.1% | 50µm | 300cpsi | 1mm | 40% | 53mm | 150mm | 1.5mm |
| Comparative Example 9 | 42.1% | 50µm | 300cpsi | 1mm | 40% | 53mm | 170mm | 1.5mm |
| Example 16 | 44.0% | 50µm | 300cpsi | 1mm | 40% | 53mm | 120mm | 1.5mm |
| Example 17 | 44.0% | 50µm | 300cpsi | 1mm | 40% | 53mm | 120mm | 1.5mm |
| Example 18 | 36.4% | 50µm | 300cpsi | 2mm | 40% | 53mm | 140mm | 1.5mm |
| Example 19 | 43.0% | 50µm | 300cpsi | 2mm | 40% | 53mm | 140mm | 1.5mm |
| Example 20 | 36.4% | 50µm | 300cpsi | 2mm | 40% | 53mm | 140mm | 1.5mm |
| Comparative Example 10 | 36.4% | 50µm | 300cpsi | 2mm | 40% | 53mm | 140mm | 1.5mm |
| Comparative Example 11 | 43.0% | 50µm | 300cpsi | 2mm | 40% | 53mm | 140mm | 1.5mm |
| Comparative Example 12 | 36.4% | 50µm | 300cpsi | 2mm | 40% | 53mm | 140mm | 1.5mm |

**[Table 3]**

| | Honeycomb body diameter | First honeycomb body length L1 | First non-opening region length T | Opening region length A | Second non-opening region length B | Second honeycomb body length L2 | Separation distance D |
|---|---|---|---|---|---|---|---|
| Example 21 | 50mm | 60mm | 5mm | 45.7mm | 9.3mm | 60mm | 20mm |
| Example 22 | 50mm | 60mm | 2mm | 56.2mm | 1.8mm | 60mm | 20mm |
| Example 23 | 50mm | 60mm | 10mm | 45.7mm | 4.3mm | 60mm | 20mm |
| Comparative Example 13 | 50mm | 60mm | 3mm | 40.5mm | 16.5mm | 60mm | 20mm |
| Comparative Example 14 | 50mm | 60mm | 1mm | 56.2mm | 2.8mm | 60mm | 20mm |
| Comparative Example 15 | 50mm | 60mm | 15mm | 40.5mm | 4.5mm | 60mm | 20mm |
| Example 24 | 50mm | 60mm | 2mm | 49.7mm | 8.3mm | 60mm | 20mm |
| Example 25 | 50mm | 60mm | 9mm | 49.7mm | 1.3mm | 60mm | 20mm |
| Comparative Example 16 | 50mm | 60mm | 2mm | 39.3mm | 18.7mm | 60mm | 20mm |
| Comparative Example 17 | 50mm | 60mm | 1mm | 49.7mm | 9.3mm | 60mm | 20mm |
| Comparative Example 18 | 50mm | 60mm | 15mm | 39.3mm | 5.7mm | 60mm | 20mm |
| Example 26 | 50mm | 60mm | 9mm | 41.6mm | 9.4mm | 60mm | 20mm |
| Example 27 | 50mm | 60mm | 2mm | 50.8mm | 7.2mm | 60mm | 20mm |
| Example 28 | 50mm | 60mm | 10mm | 41.6mm | 8.4mm | 60mm | 20mm |
| Comparative Example 19 | 50mm | 60mm | 3mm | 41.6mm | 15.4mm | 60mm | 20mm |
| Comparative Example 20 | 50mm | 60mm | 1mm | 50.8mm | 8.2mm | 60mm | 20mm |
| Comparative Example 21 | 50mm | 60mm | 15mm | 41.6mm | 3.4mm | 60mm | 20mm |
| Example 29 | 50mm | 60mm | 7mm | 43.6mm | 9.4mm | 60mm | 20mm |
| Example 30 | 50mm | 60mm | 2mm | 50.0mm | 8.0mm | 60mm | 20mm |
| Example 31 | 50mm | 60mm | 10mm | 43.6mm | 6.4mm | 60mm | 20mm |
| Comparative Example 22 | 50mm | 60mm | 2mm | 43.6mm | 14.4mm | 60mm | 20mm |
| Comparative Example 23 | 50mm | 60mm | 1mm | 50.0mm | 9.0mm | 60mm | 20mm |
| Comparative Example 24 | 50mm | 60mm | 15mm | 43.6mm | 1.4mm | 60mm | 20mm |
| Example 32 | 50mm | 60mm | 6mm | 44.0mm | 10.0mm | 60mm | 20mm |
| Example 33 | 50mm | 60mm | 2mm | 51.9mm | 6.1mm | 60mm | 20mm |
| Example 34 | 50mm | 60mm | 10mm | 44.0mm | 6.0mm | 60mm | 20mm |
| Comparative Example 25 | 50mm | 60mm | 2mm | 44.0mm | 14.0mm | 60mm | 20mm |
| Comparative Example 26 | 50mm | 60mm | 1mm | 51.9mm | 7.1mm | 60mm | 20mm |
| Comparative Example 27 | 50mm | 60mm | 15mm | 44.0mm | 1.0mm | 60mm | 20mm |
| Example 35 | 80mm | 40mm | 8mm | 23.2mm | 8.8mm | 40mm | 20mm |
| Example 36 | 80mm | 40mm | 2mm | 29.7mm | 8.3mm | 40mm | 20mm |
| Example 37 | 80mm | 40mm | 10mm | 23.2mm | 6.8mm | 40mm | 20mm |
| Comparative Example 28 | 80mm | 40mm | 2mm | 23.2mm | 14.8mm | 40mm | 20mm |
| Comparative Example 29 | 80mm | 40mm | 1mm | 29.7mm | 9.3mm | 40mm | 20mm |
| Comparative Example 30 | 80mm | 40mm | 15mm | 23.2mm | 1.8mm | 40mm | 20mm |

**[Table 4]**

| | Value of X | Foil thickness | Cell density | Hole diameter | Opening ratio | Outer mantle diameter | Outer mantle length | Outer mantle thickness |
|---|---|---|---|---|---|---|---|---|
| Example 21 | 38.1% | 50µm | 300cpsi | 4mm | 40% | 53mm | 140mm | 1.5mm |
| Example 22 | 46.8% | 50µm | 300cpsi | 4mm | 40% | 53mm | 140mm | 1.5mm |
| Example 23 | 38.1% | 50µm | 300cpsi | 4mm | 40% | 53mm | 140mm | 1.5mm |
| Comparative Example 13 | 33.8% | 50µm | 300cpsi | 4mm | 40% | 53mm | 140mm | 1.5mm |
| Comparative Example 14 | 46.8% | 50µm | 300cpsi | 4mm | 40% | 53mm | 140mm | 1.5mm |
| Comparative Example 15 | 33.8% | 50µm | 300cpsi | 4mm | 40% | 53mm | 140mm | 1.5mm |
| Example 24 | 41.4% | 50µm | 300cpsi | 8mm | 40% | 53mm | 140mm | 1.5mm |
| Example 25 | 41.4% | 50µm | 300cpsi | 8mm | 40% | 53mm | 140mm | 1.5mm |
| Comparative Example 16 | 32.7% | 50µm | 300cpsi | 8mm | 40% | 53mm | 140mm | 1.5mm |
| Comparative Example 17 | 41.4% | 50µm | 300cpsi | 8mm | 40% | 53mm | 140mm | 1.5mm |
| Comparative Example 18 | 32.7% | 50µm | 300cpsi | 8mm | 40% | 53mm | 140mm | 1.5mm |
| Example 26 | 34.6% | 50µm | 300cpsi | 1mm | 20% | 53mm | 140mm | 1.5mm |
| Example 27 | 42.3% | 50µm | 300cpsi | 1mm | 20% | 53mm | 140mm | 1.5mm |
| Example 28 | 34.6% | 50µm | 300cpsi | 1mm | 20% | 53mm | 140mm | 1.5mm |
| Comparative Example 19 | 34.6% | 50µm | 300cpsi | 1mm | 20% | 53mm | 140mm | 1.5mm |
| Comparative Example 20 | 42.3% | 50µm | 300cpsi | 1mm | 20% | 53mm | 140mm | 1.5mm |
| Comparative Example 21 | 34.6% | 50µm | 300cpsi | 1mm | 20% | 53mm | 140mm | 1.5mm |
| Example 29 | 36.3% | 50µm | 300cpsi | 1mm | 60% | 53mm | 140mm | 1.5mm |
| Example 30 | 41.6% | 50µm | 300cpsi | 1mm | 60% | 53mm | 140mm | 1.5mm |
| Example 31 | 36.3% | 50µm | 300cpsi | 1mm | 60% | 53mm | 140mm | 1.5mm |
| Comparative Example 22 | 36.3% | 50µm | 300cpsi | 1mm | 60% | 53mm | 140mm | 1.5mm |
| Comparative Example 23 | 41.6% | 50µm | 300cpsi | 1mm | 60% | 53mm | 140mm | 1.5mm |
| Comparative Example 24 | 36.3% | 50µm | 300cpsi | 1mm | 60% | 53mm | 140mm | 1.5mm |
| Example 32 | 36.7% | 30µm | 400cpsi | 1mm | 40% | 53mm | 140mm | 1.5mm |
| Example 33 | 43.2% | 30µm | 400cpsi | 1mm | 40% | 53mm | 140mm | 1.5mm |
| Example 34 | 36.7% | 30µm | 400cpsi | 1mm | 40% | 53mm | 140mm | 1.5mm |
| Comparative Example 25 | 36.7% | 30µm | 400cpsi | 1mm | 40% | 53mm | 140mm | 1.5mm |
| Comparative Example 26 | 43.2% | 30µm | 400cpsi | 1mm | 40% | 53mm | 140mm | 1.5mm |
| Comparative Example 27 | 36.7% | 30µm | 400cpsi | 1mm | 40% | 53mm | 140mm | 1.5mm |
| Example 35 | 29.0% | 50µm | 300cpsi | 1mm | 40% | 83mm | 100mm | 1.5mm |
| Example 36 | 37.1% | 50µm | 300cpsi | 1mm | 40% | 83mm | 100mm | 1.5mm |
| Example 37 | 29.0% | 50µm | 300cpsi | 1mm | 40% | 83mm | 100mm | 1.5mm |
| Comparative Example 28 | 29.0% | 50µm | 300cpsi | 1mm | 40% | 83mm | 100mm | 1.5mm |
| Comparative Example 29 | 37.1% | 50µm | 300cpsi | 1mm | 40% | 83mm | 100mm | 1.5mm |
| Comparative Example 30 | 29.0% | 50µm | 300cpsi | 1mm | 40% | 83mm | 100mm | 1.5mm |

### <Evaluation of structural durability>

### (Examples 1 to 4)

As Examples 1 to 4, catalytic converters using the honeycomb units 1 according to the present invention were prepared as follows. Two Fe-20Cr-5Al stainless steel foils with a width of 60 mm and a foil thickness of 50 µm were drilled with a diameter of 1 mm. The holes were arranged in a zigzag arrangement and the opening ratio was set to 40%. The drilling was performed so that the axial length T of the first non-opening region 44, the axial length A of the opening region 41, and the axial length B of the second non-opening region 45 were the values listed in Examples 1 to 4 shown in Table 1.

One of the two drilled foils was used as the flat foil 2 and the other as the corrugated foil 3. The foil used as the corrugated foil 3 was corrugated so that the cell density was 300 cells per inch. By winding the flat foil 2 and the corrugated foil 3 in the overlapped state, a first honeycomb body 4A with a diameter of 50 mm, a length of 60 mm, and a cell density of 300 cells per inch was obtained.

On the other hand, by winding a pair of undrilled flat foil and corrugated foil, made of Fe-20Cr-5Al stainless steel foil with a width of 60 mm and a foil thickness of 50 µm, in the overlapped state, a second honeycomb body 4B with a diameter of 50 mm, a length of 60 mm, and a cell density of 300 cells per inch was obtained. The corrugated foil was corrugated using the same method as described above.

Subsequently, brazing foil with a width of 20 mm and a thickness of 25 µm was wrapped around the obtained first honeycomb body 4A and second honeycomb body 4B at predetermined positions, which were inserted into the outer mantle 5 with a length of 140 mm and a thickness of 1.5 mm so that the separation distance D between the first honeycomb body 4A and the second honeycomb body 4B in the axial direction was 20 mm. BNi-5 was used as the brazing foil, and SUS436L was used as the outer mantle. After the insertion, diameter reduction was applied so that the outer diameter of the outer mantle 5 was 53 mm. Then, a powder brazing material was applied to the first honeycomb body 4A and the second honeycomb body 4B at predetermined positions. BNi-5 was used as the powder brazing material.

For the joint structure in the first honeycomb body 4A and the second honeycomb body 4B, and the joint structure between the first honeycomb body 4A and the second honeycomb body 4B and the outer mantle 5, the brazing material was applied so that the joint structure described in Figure 7 in Patent Literature 4 can be obtained.

That is, for both the first honeycomb body 4A and the second honeycomb body 4B, two to three layers of corrugated foil 2 and flat foil 3 are joined from the outermost periphery in a region 10 mm from the gas inlet-side end edge, the first honeycomb body 4A and the outer mantle 5 are joined in the region 10 mm from the outlet-side edge of the first honeycomb body 4A, and the second honeycomb body 4B and the outer mantle 5 are joined in the region 10 mm from the outlet-side edge of the second honeycomb body 4B.

Then, the honeycomb unit 1 was obtained by vacuum heat treatment at 1200°C for 10 minutes in a vacuum atmosphere, followed by cooling.

A wash coat slurry containing 1.25 g of palladium per 100 g of ceria-zirconia-lanthana-alumina as the main component was passed through the first honeycomb body 4A and the second honeycomb body 4B in the honeycomb unit 1. After the excess wash coat slurry was removed, the washcoat was dried at 180°C for 1 hour and then baked at 500°C for 2 hours, whereby a wash coat slurry layer was carried on a metal foil at an amount of 200 g/L by weight after drying per volume of the first honeycomb body 4A and the second honeycomb body 4B to obtain a catalytic converter. The amount of palladium carried was 2.5 g/L.

### (Comparative Example 1)

As Comparative Example 1, a catalytic converter was prepared as follows. Two Fe-20Cr-5Al stainless steel foils with a width of 120 mm and a foil thickness of 50 µm were drilled with a diameter of 1.0 mm. The holes were arranged in a zigzag arrangement and the opening ratio was set to 40%. The drilling was performed so that the axial length T of the first non-opening region 44 was 6 mm, the axial length A of the opening region 41 was 44.0 mm, and the axial length B of the second non-opening region 45 was 70.0 mm.

One of the two drilled foils was used as the flat foil 2 and the other as the corrugated foil 3. The foil used as the corrugated foil 3 was corrugated so that the cell density was 300 cells per inch. A honeycomb body with a diameter of 50 mm, a length of 120 mm, and a cell density of 300 cells per inch was obtained by winding the flat foil 2 and the corrugated foil 3 in the overlapped state.

Subsequently, brazing foil with a width of 20 mm and a thickness of 25 µm was wound around the obtained honeycomb body at a predetermined position, and the honeycomb body was inserted into the outer mantle 5 with a length of 120 mm and a thickness of 1.5 mm. BNi-5 was used as the brazing foil, and SUS436L was used as the outer mantle. After the insertion, diameter reduction was applied so that the outer diameter of the outer mantle 5 was 53 mm. Then, the powder brazing material was applied to the obtained honeycomb body at the predetermined position. BNi-5 was used as the powder brazing material. The joint structure of the honeycomb body and the joint structure of the honeycomb body and the outer mantle 5 were the same as those of Example 1.

Thereafter, the honeycomb unit was obtained by vacuum heat treatment as in Example 1, and the catalytic converter was obtained by catalyst-carrying treatment as in Example 1.

### (Comparative Example 2)

As Comparative Example 2, a catalytic converter was obtained by performing drilling as in Example 1 so that the axial length T of the first non-opening region 44 was 2 mm, the axial length A of the opening region 41 was 44.0 mm, and the axial length B of the second non-opening region 45 was 14.0 mm, and other manufacturing conditions were the same as those in Example 1.

### (Comparative Example 3)

As Comparative Example 3, a catalytic converter was obtained by performing drilling as in Example 1 so that the axial length T of the first non-opening region 44 was 1 mm, the axial length A of the opening region 41 was 51.9 mm, and the axial length B of the second non-opening region 45 was 7.1 mm, and other manufacturing conditions were the same as those in Example 1.

### (Comparative Example 4)

As Comparative Example 4, a catalytic converter was obtained by performing drilling as in Example 1 so that the axial length T of the first non-opening region 44 was 15 mm, the axial length A of the opening region 41 was 44.0 mm, and the axial length B of the second non-opening region 45 is 1.0 mm, and other manufacturing conditions were the same as those in Example 1.

The structural durability of the catalytic converter obtained in each of Examples 1 to 4 and Comparative Examples 1 to 4 was evaluated by conducting heating and cooling cycle tests on an engine bench. A test device and the substrate for carrying catalyst were connected via a cone. Welding was used as the connection method. A single-cylinder gasoline engine with a displacement of 400cc was used for the engine.

A temperature pattern in which the inlet-side temperature of the gas flowing into the substrate for carrying catalyst was changed between 1000°C and 100°C or less was selected as a pattern for a cooling/heating cycle. That is, a cooling/heating cycle including the following steps was set as one cycle: a warming step in which the inlet-side temperature of the gas reaches 900°C in about 30 seconds by rotating the engine for 5 minutes from the engine stop state; a holding step in which the temperature after the reach (1000°C) is held; and a cooling step in which the engine is stopped and room temperature air is supplied for 5 minutes to cool the gas to 100°C in about 60 seconds and then room temperature air is allowed to flow continuously.

After repetition of this cooling/heating cycle for 1000 cycles, the honeycomb body was observed to check for the occurrence of cracks in the boundary region between the opening region 41 and the non-opening region 45. As a result, the honeycomb body in each of Comparative Examples 1 and 2 had cracks near the boundary between the opening region 41 and the second non-opening region 45. The cracks propagated in the radial direction and penetrated to the center of the honeycomb body. In the first honeycomb body 4A in Comparative Example 3, no cracks occurred near the boundary between the opening region 41 and the second non-opening region 45, but a failure occurred in which the foil at the inlet-side edge was defective due to foil chipping. The honeycomb body in Comparative Example 4 had cracks near the boundary between the opening region 41 and the first non-opening region 44. The cracks propagated in the radial direction and penetrated to the center of the honeycomb body. On the other hand, no cracks propagating in the radial direction were observed in the honeycomb body in each of Examples 1 to 4. In addition, there was no failure in which the foil at the inlet-side edge was defective due to foil chipping. From the above, it was shown that when the axial length B of the second non-opening region 45 is 10 mm or less from the outlet-side edge of the first honeycomb body 4A, and the axial length T of the first non-opening region 44 is 2 mm or more and 10 mm or less from the inlet-side edge of the first honeycomb body 4A, the structural durability of the catalytic converter is improved and cracks near the boundary between the opening region and the non-opening region are suppressed.

### <Evaluation of pressure loss and purification performance>

### (Examples 5 to 11, Comparative Examples 5 to 6)

Next, the pressure loss and purification performance were evaluated by changing in various ways the value of X (the ratio of the axial length A of the opening region 41 of the first honeycomb body 4A to the sum of the axial length L1 of the first honeycomb body 4A and the axial length L2 of the second honeycomb body 4B).

As Examples 5 to 11 and Comparative Examples 5 and 6, a catalytic converter was prepared as follows. Two Fe-20Cr-5Al stainless steel foils with a foil thickness of 50 µm were drilled with a diameter of 1 mm. The holes were arranged in a zigzag arrangement and the opening ratio was set to 40%. The drilling was performed so that the axial length T of the first non-opening region 41, the axial length A of the opening region 41, and the axial length B of the second non-opening region 45 were the values in each of the examples and comparative examples shown in Table 1. The width of the two Fe-20Cr-5A1 stainless steel foils was set appropriately to be the length L1 of the first honeycomb body 4A in each of the examples and comparative examples (cf. Table 1).

One of the two drilled foils was used as the flat foil 2 and the other as the corrugated foil 3. The foil used as the corrugated foil 3 was corrugated so that the cell density was 300 cells per inch. The first honeycomb body 4A with a diameter of 50 mm and a cell density of 300 cells per inch was obtained by winding the flat foil 2 and the corrugated foil 3 in the overlapped state.

On the other hand, the second honeycomb body 4B with a diameter of 50 mm and a cell density of 300 cells per inch was obtained by winding a pair of undrilled flat foil and corrugated foil, made of Fe-20Cr-5Al stainless steel foil with a foil thickness of 50 µm, in the overlapped state. The corrugated foil was corrugated using the same method as described above. The width of each of the two Fe-20Cr-5Al stainless foils was appropriately set to the length L2 of the second honeycomb body 4B in each of the examples and comparative examples (cf. Table 1).

Thereafter, the honeycomb unit was obtained by vacuum heat treatment as in Example 1, and the catalytic converter was obtained by catalyst-carrying treatment as in Example 1.

As a catalytic converter for comparison of pressure loss and purification performance (hereinafter referred to as a reference catalytic converter), a catalytic converter only including the second honeycomb body 4B with a length of 100 mm was manufactured. The manufacturing conditions of the reference catalytic converter are the same as those of Examples 5 to 11 and Comparative Examples 5 to 6 except that the first honeycomb body 4A is not included.

The pressure loss was evaluated by allowing air at normal temperature, adjusted to a predetermined flow rate, to flow through the catalytic converter, obtained in each of the examples and comparative examples, and measuring the pressure difference before and after the catalytic converter. In the present example, the pressure loss was evaluated by allowing air at 20°C to flow at a flow rate of 2.5 Nm³/min. This is about 21 m/s on average in terms of flow velocity. The pressure loss of each of the examples and comparative examples was evaluated as the rate of increase (hereinafter referred to as a pressure loss increase rate) relative to the pressure loss in the reference catalytic converter.

On the other hand, for the purification performance, a model gas (a gas mixture consisting of carbon monoxide, propylene, nitric oxide, oxygen, carbon dioxide, steam, and nitrogen), adjusted to a predetermined flow rate (in the present embodiment, 300 liters per minute in the standard state) and heated to 300°C, was allowed to flow through the catalytic converter at normal temperature obtained in each of the examples and comparative examples, and the time required for the propylene concentration to decrease by 50% (hereinafter referred to as 50% purification time) was evaluated as the purification performance during the cold start. The concentrations of the respective gases constituting the model gas were as follows: carbon monoxide, 5000 ppm; propylene, 500 ppm; nitric oxide, 500 ppm; oxygen, 4500 ppm; carbon dioxide, 14%; water vapor, 10%; with nitrogen making up the remainder. The purification performance (50% purification time) of each of the examples and comparative examples was evaluated as the rate of increase (hereinafter referred to as a purification performance increase rate) relative to the inverse of 50% purification time in the reference catalytic converter, taking the inverse of 50% purification time.

There is a trade-off between purification performance and pressure loss, and as the ratio X of the axial length of the opening region to the sum of the axial lengths of the respective honeycomb bodies increases, the pressure loss increases, but the purification performance (the inverse of 50% purification time) also increases. Therefore, when the ratio of the pressure loss increase rate to the purification performance increase rate exceeded 2.5, the evaluation was set as "Poor" because the purification performance had not been sufficiently improved compared to the increase in pressure loss. When the ratio of the pressure loss increase rate to the purification performance increase rate was 2.5 or less, the evaluation was set as "Good" because the purification performance had been sufficiently improved compared to the increase in pressure loss. Moreover, when the ratio of the pressure loss increase rate to the purification performance increase rate was 2 or less, the evaluation was set as "Excellent" because the purification performance had been more sufficiently improved compared to the increase in pressure loss. Table 5 shows the evaluation results of pressure loss and purification performance.

**[Table 5]**

| | Pressure loss increase rate | Purification performance increase rate | Pressure loss increase rate /Purification performance increase rate | Evaluation |
|---|---|---|---|---|
| Comparative Example 5 | 0.21 | 0.06 | 3.29 | Poor |
| Example 5 | 0.32 | 0.14 | 2.35 | Good |
| Example 6 | 0.42 | 0.22 | 1.91 | Excellent |
| Example 7 | 0.53 | 0.28 | 1.88 | Excellent |
| Example 8 | 0.63 | 0.33 | 1.89 | Excellent |
| Example 9 | 0.74 | 0.35 | 2.11 | Good |
| Example 10 | 0.84 | 0.37 | 2.27 | Good |
| Example 11 | 0.91 | 0.37 | 2.46 | Good |
| Comparative Example 6 | 0.98 | 0.37 | 2.65 | Poor |

Referring to Comparative Examples 5 and 6, when X is less than 20% or greater than 80%, the purification performance was not sufficiently improved with respect to the increase in pressure loss, and the evaluation was "Poor". On the other hand, referring to Examples 5 to 11, when the value of X was 20% to 80%, the purification performance had been sufficiently improved with respect to the increase in pressure loss, and the evaluation was "Good" or better. Moreover, referring to Example 6 to 8, when the value of X is 25% to 55%, the purification performance had been further improved with respect to the increase in pressure loss, and the evaluation was "Excellent".

### <Effect of separation distance D>

### (Examples 12 to 15, Comparative Examples 7 to 9)

Next, the relationship between the separation distance D between the first honeycomb body 4A and the second honeycomb body 4B and the purification performance was investigated. Specifically, in Examples 12 to 15 and Comparative Examples 7 to 9, the separation distance D was changed in various ways (cf. Table 1), and the purification performance in each of the examples and comparative examples was compared. The manufacturing was performed in the same manner as in Example 1 so that the other manufacturing conditions were the values for each of the examples and comparative examples as shown in Table 1, to obtain a catalytic converter.

For the purification performance, a model gas (a gas mixture consisting of carbon monoxide, propylene, nitric oxide, oxygen, carbon dioxide, steam, and nitrogen) heated to 300°C was allowed to flow through the catalytic converter at normal temperature at a predetermined flow rate, and the time required for the concentration of propylene to decrease by 90% was evaluated as the purification performance in the steady state. The concentrations of the respective gases constituting the model gas were as follows: carbon monoxide, 5000 ppm; propylene, 500 ppm; nitric oxide, 500 ppm; oxygen, 4500 ppm; carbon dioxide, 14%; water vapor, 10%; with nitrogen making up the remainder. The purification performance was evaluated by allowing the flow of 300 liters per minute under the standard condition. As the purification performance evaluation, the time required for the concentration of propylene to decrease by 90% (hereinafter referred to as 90% purification time) was evaluated as the purification performance in the steady state. The purification performance (90% purification time) of each of the examples and comparative examples was evaluated as a ratio to the 90% purification time in Comparison Example 9. Table 6 shows the evaluation results.

**[Table 6]**

| | Ratio to 90% purification time |
|---|---|
| Comparative Example 7 | - |
| Example 12 | 0.62 |
| Example 13 | 0.65 |
| Example 14 | 0.75 |
| Example 15 | 0.85 |
| Com parative Example 8 | 1 |
| Com parative Example 9 | 1 |

Comparing with Comparative Example 9 (separation distance 50 mm), the 90% purification time was not improved even when the separation distance D was set to 30 mm (Comparative Example 8). On the other hand, when the separation distance D was set to 20 mm, the 90% purification time was reduced by about 15% (Example 15). When the separation distance D was set to 10 mm, the 90% purification time was reduced by about 25% (Example 14). When the separation distance D was set to 5 mm, the 90% purification time was reduced by about 35% (Example 13). When the separation distance D was set to 2 mm, the 90% purification time was reduced by about 38% (Example 12). This is considered to be because the heat dissipation at the separation section was sufficiently reduced by setting the separation distance D to 20 mm or less.

When the separation distance D was set to 1 mm, the first honeycomb body 4A and the second honeycomb body 4B were damaged, and hence the 90% purification time could not be measured. This is because foil elongation occurred in the foil constituting the first honeycomb body 4A, and the outlet-side edge of the first honeycomb body 4A and the inlet-side edge of the second honeycomb body 4B came into contact.

From the above, it was found necessary to set the separation distance D between 2 mm and 20 mm.

### <Effect of length of T>

### (Examples 16 to 17)

As Example 16, as shown in Table 1, the catalytic converter was obtained by performing drilling so that the axial length T of the first non-opening region 44 was 2 mm, the axial length A of the opening region 41 was 44.0 mm, and the axial length B of the second non-opening region 45 was 9.0 mm, and other manufacturing conditions were the same as those in Example 5. As Example 17, as shown in Table 1, the catalytic converter was obtained by performing drilling so that the axial length T of the first non-opening region 44 was 10 mm, the axial length A of the opening region 41 was 44.0 mm, and the axial length B of the second non-opening region 45 was 1.0 mm, and other manufacturing conditions were the same as those in Example 5. Subsequently, the catalytic converter obtained in each of Examples 16 and 17 was evaluated for pressure loss and purification performance by the same method as that performed for Example 5. Table 7 shows the results of the evaluation of pressure loss and purification performance.

**[Table 7]**

| | Pressure loss increase rate | Purification performance increase rate | Pressure loss increase rate /Purification performance increase rate | Evaluation |
|---|---|---|---|---|
| Example 16 | 0.59 | 0.32 | 1.87 | Excellent |
| Example 17 | 0.59 | 0.28 | 2.09 | Good |

While the pressure loss increase rate did not change between Example 16 and Example 17, the purification performance was improved in Example 16 relative to Example 17. As a result, the ratio of the pressure loss increase rate to the purification performance increase rate was evaluated as "Excellent" in Example 16 and "Good" in Example 17. That is, when the length of the axial length T of the first non-opening region 44 was shorter than the length of the axial length B of the second non-opening region 45, the relationship between the pressure loss and the purification performance was better.

### <Effect of hole diameter>

### (Examples 18 to 25, Comparative Examples 10 to 18)

In Examples 18 to 25 and Comparative Examples 10 to 18, the effect of changing the hole diameter from Examples 1 to 4 and Comparative Examples 1 to 4 was investigated. In Examples 18 to 20 and Comparative Examples 10 to 12, the hole diameter was set to 2 mm. In Examples 21 to 23 and Comparative Examples 13 to 15, the hole diameter was set to 4 mm. In Examples 24 to 25 and Comparative Examples 16 to 18, the hole diameter was set to 8 mm. Other parameters were set as shown in Tables 1 to 4. The catalytic converter was manufactured using the same manufacturing method as in Example 1 and tested in the same manner as in Example 1 to investigate the structural durability of the catalytic converter.

The first honeycomb body 4A in each of Comparative Examples 10, 13, and 16 had cracks near the boundary between the opening region 41 and the second non-opening region 45. The cracks propagated in the radial direction and penetrated to the center of the honeycomb body. In the first honeycomb body 4A in each of Comparative Examples 11, 14, and 17, no cracks occurred near the boundary between the opening region 41 and the second non-opening region 45, but a failure occurred in which the foil at the inlet-side edge was defective due to foil chipping. The first honeycomb body 4A in each of Comparative Examples 12, 15, and 18 had cracks near the boundary between the opening region 41 and the first non-opening region 44. The cracks propagated in the radial direction and penetrated to the center of the honeycomb body. On the other hand, in the honeycomb body in each of Examples 18 to 25, there were no cracks propagating in the radial direction, and there was no failure in which the foil at the inlet-side edge was defective due to foil chipping. From the above, it was shown that when the axial length B of the second non-opening region 45 is 10 mm or less from the outlet-side edge of the first honeycomb body 4A, and the axial length T of the first non-opening region 44 is 2 mm or more and 10 mm or less from the inlet-side edge of the first honeycomb body 4A, the structural durability of the catalytic converter is improved regardless of the hole diameter, and cracks near the boundary between the opening region and the non-opening region are suppressed.

### <Effect of opening ratio>

### (Examples 26 to 31, Comparative Examples 19 to 24)

In Examples 26 to 31 and Comparative Examples 19 to 24, the effect of changing the opening ratio from Examples 1 to 4 and Comparative Examples 1 to 4 was investigated. In Examples 26 to 28 and Comparative Examples 19 to 21, the opening ratio was set to 20%. In Examples 29 to 31 and Comparative Examples 22 to 24, the opening ratio was set to 60%. Other parameters were set as shown in Tables 3 and 4. The catalytic converter was manufactured using the same manufacturing method as in Example 1 and tested in the same manner as in Example 1 to investigate the structural durability of the catalytic converter.

The first honeycomb body 4A in each of Comparative Examples 19 and 22 had cracks near the boundary between the opening region 41 and the second non-opening region 45. The cracks propagated in the radial direction and penetrated to the center of the honeycomb body. In the first honeycomb body 4A in Comparative Examples 20 and 23, no cracks occurred near the boundary between the opening region 41 and the second non-opening region 45, but a failure occurred in which the foil at the inlet-side edge was defective due to foil chipping. The first honeycomb body 4A in each of Comparative Examples 21 and 24 had cracks near the boundary between the opening region 41 and the first non-opening region 44. The cracks propagated in the radial direction and penetrated to the center of the honeycomb body. On the other hand, in the honeycomb body in each of Examples 26 to 31, there were no cracks propagating in the radial direction, and there was no failure in which the foil at the inlet-side edge was defective due to foil chipping. From the above, it was shown that when the axial length B of the second non-opening region 45 is 10 mm or less from the outlet-side edge of the first honeycomb body 4A, and the axial length T of the first non-opening region 44 is 2 mm or more and 10 mm or less from the inlet-side edge of the first honeycomb body 4A, the structural durability of the catalytic converter is improved regardless of the opening ratio, and cracks near the boundary between the opening region and the non-opening region are suppressed.

### <Effect of foil thickness and cell density>

### (Examples 32 to 34, Comparative Examples 25 to 27)

In Examples 32 to 34 and Comparative Examples 25 to 27, the effects of changing the foil thickness and cell density from Examples 1 to 4 and Comparative Examples 1 to 4 were investigated. In Examples 32 to 34 and Comparative Examples 25 to 27, the foil thickness was 30 µm and the cell density was 400cpsi. Other parameters were set as shown in Tables 3 and 4. The catalytic converter was manufactured using the same manufacturing method as in Example 1 and tested in the same manner as in Example 1 to investigate the structural durability of the catalytic converter.

The first honeycomb body 4A in Comparative Example 25 had cracks near the boundary between the opening region 41 and the second non-opening region 45. The cracks propagated in the radial direction and penetrated to the center of the honeycomb body. In the first honeycomb body 4A in Comparative Example 26, no cracks occurred near the boundary between the opening region 41 and the second non-opening region 45, but a failure occurred in which the foil at the inlet-side edge was defective due to foil chipping. The first honeycomb body 4A in Comparative Example 27 had cracks near the boundary between the opening region 41 and the first non-opening region 44. The cracks propagated in the radial direction and penetrated to the center of the honeycomb body. On the other hand, in the honeycomb body in each of Examples 32 to 34, there were no cracks propagating in the radial direction, and there was no failure in which the foil at the inlet-side edge was defective due to foil chipping. From the above, it was shown that when the axial length B of the second non-opening region 45 is 10 mm or less from the outlet-side edge of the first honeycomb body 4A, and the axial length T of the first non-opening region 44 is 2 mm or more and 10 mm or less from the inlet-side edge of the first honeycomb body 4A, the structural durability of the catalytic converter is improved regardless of the foil thickness and the cell density, and cracks near the boundary between the opening region and the non-opening region are suppressed.

### <Effect of diameter and length of honeycomb body>

### (Examples 35 to 37, Comparative Examples 28 to 30)

In Examples 35 to 37 and Comparative Examples 28 to 30, the effects of changing the diameter and length of the honeycomb body from Examples 1 to 4 and Comparative Examples 1 to 4 were investigated. In Examples 35 to 37 and Comparative Examples 28 to 30, the diameter and the axial length of each of the first honeycomb body 4A and the second honeycomb body 4B were 80 mm and 40 mm, respectively. Other parameters were set as shown in Tables 3 and 4. The catalytic converter was manufactured using the same manufacturing method as in Example 1 and tested in the same manner as in Example 1 to investigate the structural durability of the catalytic converter.

The first honeycomb body 4A in Comparative Example 28 had cracks near the boundary between the opening region 41 and the second non-opening region 45. The cracks propagated in the radial direction and penetrated to the center of the honeycomb body. In the first honeycomb body 4A in Comparative Example 29, no cracks occurred near the boundary between the opening region 41 and the second non-opening region 45, but a failure occurred in which the foil at the inlet-side edge was defective due to foil chipping. The first honeycomb body 4A in Comparative Example 30 had cracks near the boundary between the opening region 41 and the first non-opening region 44. The cracks propagated in the radial direction and penetrated to the center of the honeycomb body. On the other hand, in the honeycomb body in each of Examples 35 to 37, there were no cracks propagating in the radial direction, and there was no failure in which the foil at the inlet-side edge was defective due to foil chipping. From the above, it was shown that when the axial length B of the second non-opening region 45 is 10 mm or less from the outlet-side edge of the first honeycomb body 4A, and the axial length T of the first non-opening region 44 is 2 mm or more and 10 mm or less from the inlet-side edge of the first honeycomb body 4A, the structural durability of the catalytic converter is improved regardless of the diameter and axial length of the honeycomb body, and cracks near the boundary between the opening region and the non-opening region are suppressed.

### Reference Signs List

- 1: honeycomb unit
- 2: flat foil
- 3: corrugated foil
- 4: substrate for carrying catalyst
- 4A: first honeycomb body
- 4B: second honeycomb body
- 5: outer mantle
- 6: separation section
- 41: opening region
- 44: first non-opening region
- 45: second non-opening region
- 46: non-opening region
- 410: through hole

## Claims

1. A substrate for carrying catalyst comprising a plurality of honeycomb bodies, the substrate for carrying catalyst being used for purifying exhaust gas of a vehicle, wherein
the plurality of honeycomb bodies are arranged side by side such that central axes of each of the honeycomb bodies substantially coincide,
of the plurality of honeycomb bodies, many through holes are formed in one or more metal foils of a first honeycomb body positioned closest to the exhaust gas inlet side, and no through hole is formed in metal foils of other remaining one or more honeycomb bodies,
when the first honeycomb body is divided in the axial direction into the following regions: an opening region in which the through holes are formed; a first non-opening region from the exhaust gas inlet-side end of the opening region to the exhaust gas inlet-side edge of the first honeycomb body; and a second non-opening region from the exhaust gas outlet-side end of the opening region to the exhaust gas outlet-side edge of the first honeycomb body, a length of the first non-opening region in the axial direction is 2 mm or more and 10 mm or less, and a length of the second non-opening region in the axial direction is 10 mm or less,
when a honeycomb body adjacent to the first honeycomb body in the axial direction is defined as a second honeycomb body, the first honeycomb body and the second honeycomb body are separated in the axial direction, and a separation distance between the first honeycomb body and the second honeycomb body in the axial direction is 2 mm or more and 20 mm or less, and
a ratio of a length of the opening region in the axial direction to a sum of lengths of the plurality of honeycomb bodies in the axial direction is 20% or more and 80% or less.

2. The substrate for carrying catalyst according to claim 1, wherein the separation distance between the first honeycomb body and the second honeycomb body in the axial direction is 2 mm or more and less than 10 mm.

3. The substrate for carrying catalyst according to claim 1 or 2, wherein the length of the second non-opening region in the axial direction is longer than the length of the first non-opening region in the axial direction.

4. A honeycomb unit comprising:
the substrate for carrying catalyst according to any one of claims 1 to 3; and
an outer mantle that houses the substrate for carrying catalyst.

5. A catalytic converter comprising:
the honeycomb unit according to claim 4; and
a catalyst carried on each of the plurality of honeycomb bodies.
